Europäisches Patentamt

European Patent Office

Office européen des brevets

(19)

(11) Veröffentlichungsnummer: **0 181 425**
**B1**

(12)     # EUROPÄISCHE PATENTSCHRIFT

(45) Veröffentlichungstag der Patentschrift:
**22.06.88**

(51) Int. Cl.⁴: **G 01 B 7/26**, A 01 B 63/111

(21) Anmeldenummer: **85101750.9**

(22) Anmeldetag: **16.02.85**

(54) Vorrichtung zur Messung der Eindringtiefe von landwirtschaftlichen Bodenbearbeitungsgeräten.

(43) Veröffentlichungstag der Anmeldung:
**21.05.86 Patentblatt 86/21**

(45) Bekanntmachung des Hinweises auf die Patenterteilung:
**22.06.88 Patentblatt 88/25**

(84) Benannte Vertragsstaaten:
**DE FR GB NL**

(56) Entgegenhaltungen:
**DE - C - 3 237 538**

(73) Patentinhaber: **Kirchberger, Franz, Lichtenfelser Strasse 43, D-8623 Staffelstein (DE)**

(72) Erfinder: **Kirchberger, Franz, Lichtenfelser Strasse 43, D-8623 Staffelstein (DE)**

(74) Vertreter: **LOUIS, PÖHLAU, LOHRENTZ & SEGETH, Kesslerplatz 1 Postfach 3055, D-8500 Nürnberg (DE)**

**Beschreibung**

Die Erfindung betrifft eine Vorrichtung zur Messung der Eindringtiefe von landwirtschaftlichen Bodenbearbeitungsgeräten, wie z.B. Pflugschar, Säschar oder Grubber.

Von der Eindringtiefe von landwirtschaftlichen Bodenbearbeitungsgeräten hängt das spätere Pflanzenwachstum wesentlich ab. Es ist daher wichtig, die jeweils richtige Eindringtiefe während der Bodenbearbeitung einhalten zu können. Dazu ist es zunächst notwendig, die Eindringtiefe zu messen.

Es ist bekannt, die Eindringtiefe von Bodenbearbeitungsgeräten mit Hilfe von das Bodenniveau relativ zum Werkzeugniveau mechanisch abtastenden Aufnehmern zu messen (siehe beispielsweise DE-C1-3 237 538). Eine derartige Vorrichtung erfordert jedoch einen grossen mechanischen und elektrischen Aufwand und ist aufgrund des vergleichsweise grossen mechanischen Aufwandes grundsätzlich störanfällig.

Es sind auch Versuche gemacht worden, mit Hilfe von Radar oder Laser die Eindringtiefe von Bodenbearbeitungsgeräten zu messen. Solche Geräte sind teuer und unzuverlässig. Bei den zu erfassenden kurzen Entfernungen und sich ständig wechselnden Absorptions- und Reflexionsbedingungen, beispielsweise je nach Pflanzendecke, ergibt sich ein hoher Rauschpegel, der die Messung erheblich beeinträchtigt.

Der Erfindung liegt daher die Aufgabe zugrunde, eine Vorrichtung der eingangs genannten Art zu schaffen, die auf einfache Weise eine zuverlässige Messung der Eindringtiefe des Bodenbearbeitungsgerätes erlaubt und nicht störanfällig ist.

Diese Aufgabe wird – ausgehend von der eingangs genannten Vorrichtung – erfindungsgemäss dadurch gelöst, dass eine erste Antenne für ein Nachziehen auf dem Grund der vom Bodenbearbeitungsgrät erzeugten Furche und eine zweite Antenne für ein Nachziehen auf der nicht aufgegrabenen Bodenoberfläche sowie eine Einrichtung zur Messung des Abstandes der beiden Antennen mit Hilfe von zwischen den beiden Antennen ausgetauschter elektromagnetischer Signale vorgesehen sind.

Eine Variante ist durch die Merkmale des Anspruchs 7 gekennzeichnet.

Bei der erfindungsgemässen Vorrichtung besteht die gesamte Mechanik eigentlich nur in der Befestigung der beiden Antennen, die auf dem Boden entlanglaufen. Mechanisch gesehen ist also die Vorrichtung extrem einfach. Aber auch die Einrichtung zur Messung des Abstandes der beiden Antennen mit Hilfe eines Austausches elektromagnetischer Signale ist bei dem heutigen Stand der Technik kein Problem und wesentlich weniger aufwendig als beispielsweise die für eine Radar- oder Lasermessung erforderliche elektronische Einrichtung. Schliesslich aber kann die erfindungsgemässe Einrichtung zuverlässig und genau Auskunft über die Eindringtiefe geben, weil nach dem erfindungsgemässen Prinzip auf elektromagnetischem Wege der Abstand zwischen einem Empfänger und einem Sender gemessen wird und diese Messung unabhängig von der Beschaffenheit des dazwischenliegenden Bodens ist. Auch ist bei einem lockeren Seil beispielsweise oder einer Kette eine Auflage auf der über dem Furchengrund liegenden Bodenoberfläche einerseits und dem Furchengrund andererseits immer sicher gegeben, so dass in der Tat davon ausgegangen werden kann, dass der Abstand der beiden Antennen die Furchentiefe wiederspiegelt.

Vorzugsweise sind die Antennen Seile. Die Antennen können aber auch flexible Gebilde wie beispielsweise Metallbänder sein, die gegen den Boden drücken. Insbesondere können die Antennen jeweils eine isolierende Kunststoffseele, eine Metallwicklung um diese Seele und um die Metallwicklung ein schützendes Kunststoffrohr aufweisen. Dabei kann die erste Antenne an der Sohle des oder eines Werkzeuges des Bodenbearbeitungsgerätes und die zweite Antenne durchhängend am Werkzeugträger befestigt sein. Schliesslich ist es im Hinblick auf eine Energieersparnis zweckmässig, die Messung des Abstandes der beiden Antennen intermittierend von der Einrichtung durchführen zu lassen.

In der am 6.12.84 angemeldeten und am 11.6.86 veröffentlichten EP-A1-183 868 wird eine Vorrichtung zum Messen der Eindringtiefe von landwirtschaftlichen Bodenbearbeitungsgeräten beschrieben, bei der ein den Boden berührendes Bodenabtastglied, z.B. ein Schlauch, eine Kette oder ein Seil, mit einem in etwa vertikal beweglich geführten elektrischem Geber verbunden ist.

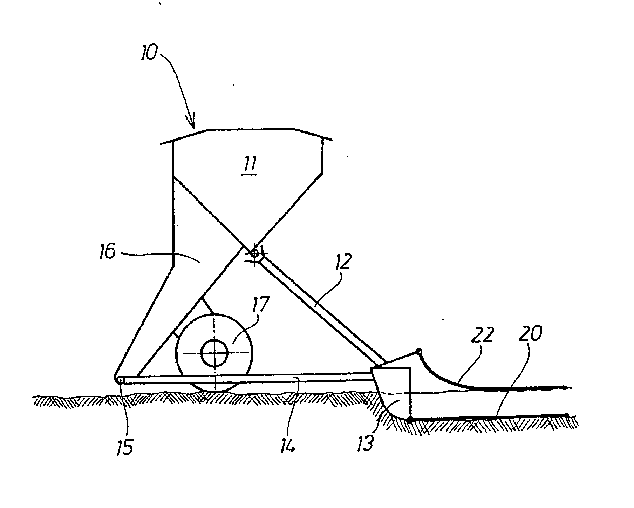

In der beiliegenden Zeichnung ist die Erfindung veranschaulicht. Mit Hilfe der Zeichnung und der folgenden Beschreibung wird die Erfindung noch näher erläutert.

Die in dem vorliegenden Ausführungsbeispiel gezeigte Drillmaschine 10 weist einen Saatkasten 11 auf, von dessen Boden sich zahlreiche teleskopierbare Saatrohre 12 nach unten erstrecken, die jeweils in ein Schar 13 münden. Zwischen den Auslassöffnungen im Boden des Saatkastens 11 und den oberen Enden der Saatrohre 12 ist eine übliche Dosiereinrichtung angeordnet. Jedes Schar ist an einem Ende von Schararmen 14 befestigt, die mit ihren anderen Enden auf eine Achse 15 in vertikalen Ebenen schwenkbar gelagert sind. Die Achse 15 erstreckt sich horizontal zwischen den unteren Enden von Maschinenrahmenteilen 16 quer über die Drillmaschine 10. Diese Maschinenrahmenteile 16 tragen auch den Saatkasten 11 sowie die Laufräder 17 der Drillmaschine 10.

Zur Einstellung der Arbeitstiefe der Schare 13 ist eine Messvorrichtung vorgesehen, die an mindestens einem der Schare der Drillmaschine zwei Antennen 20 und 22 in Form von Seilen aufweist. Die eine Antenne 20 ist am unteren Ende der die Furche ziehenden Säschar 13 befestigt und wird somit lose auf dem Furchengrund aufliegend nachgezogen, während die zweite Antenne 22 irgendwo oberhalb der Bodenoberfläche an der Drillmaschine, beispielsweise am oberen Ende des Säschars 13, befestigt ist und die Antenne 20 gegenüberliegend auf der Bodenoberfläche selbst nachgezogen wird, wobei sie ohne weiteres durchhängen kann, so dass plötzlich auftauchende Bodenerhebungen auch leicht überwunden werden können. Der zum Messzeitpunkt kleinste Abstand zwischen den beiden Antennen 20 und 22 wird nun mit Hilfe einer nicht näher dargestellten Einrichtung gemessen, indem elektromagnetische Signale zwischen den beiden Antennen ausgetauscht werden. So kann beispielsweise die Antenne 22 als Sendeantenne an einem Trafo angeschlossen sein, dessen mit definierter stabilisierter Spannung bestromte Primärspule abgeschaltet wird, um über die Sekundärspule eine Spannungsspitze in der Sendeantenne 22 induktiv zu erzeugen. Die dadurch in der Sendeantenne entstehende Stromspitze erzeugt nun induktiv eine Spannungs- und Stromspitze in der Empfangsantenne 20. Die Höhe dieser Spitze ist abhängig vom Abstand der Antennen und liefert ein auswertbares Kriterium. Zwar verläuft die Höhe der in die Empfangsantenne induzierten Spannungsspitze nicht proportional zum Abstand, jedoch lässt sich seine Funktion tabellarisch erfassen. Dabei kann, um Energie zu sparen, nur in kurzen Intervallen, nämlich in Nanosekundenbereichen, gesendet werden.

Selbstverständlich kann die Erfindung auch bei anderen landwirtschaftlichen Bodenbearbeitungsgeräten, wie z.B. bei einem Pflugschar oder einem Grubber angewendet werden.

Anstelle des Austausches elektromagnetischer Signale kann auch ein zwischen beiden Antennen fliessender Strom zur Messung des Abstandes der beiden Antennen herangezogen werden. In diesem Fall wird eigentlich der zwischen beiden Antennen auftretende Widerstand gemessen, der natürlich mit dem Abstand der beiden Antennen wächst.

Schliesslich kann auch von einer Kombination insofern Gebrauch gemacht werden, als mit Hilfe der elektromagnetischen Signale der Abstand der beiden Antennen und damit die Tiefe der Furche gemessen wird, während mit Hilfe eines mit den elektromagnetischen Signalen gleichzeitigen oder dazu zeitlich versetzten elektromagnetischen Stromes die Bodenfeuchtigkeit bzw. Bodenbeschaffenheit gemessen wird, die ja neben der Tiefe ebenfalls eine höchst interessante Grösse für den Pflanzenwuchs ist.

## Patentansprüche

1. Vorrichtung zur Messung der Eindringtiefe von landwirtschaftlichen Bodenbearbeitungsgeräten, wie z.B. Pflugschar, Säschar oder Grubber, dadurch gekennzeichnet, dass eine erste Antenne (20) für ein Nachziehen auf dem Grund der vom Bodenbearbeitungsgerät (10) erzeugten Furche und eine zweite Antenne (22) für ein Nachziehen auf der nicht aufgegrabenen Bodenoberfläche sowie eine Einrichtung zur Messung des Abstandes der beiden Antennen (20, 22) mit Hilfe von zwischen den beiden Antennen ausgetauschter elektromagnetischer Signale vorgesehen sind.

2. Vorrichtung nach Anspruch 1, dadurch gekennzeichnet, dass die Antennen Seile sind.

3. Vorrichtung nach Anspruch 1, dadurch gekennzeichnet, dass die Antennen jeweils eine isolierende Kunststoffseele, eine Metallwicklung um diese Seele und um die Metallwicklung ein schützendes Kunststoffmantelrohr aufweisen.

4. Vorrichtung nach einem der Ansprüche 1 bis 3, dadurch gekennzeichnet, dass die erste Antenne (20) an der Sohle des oder eines Werkzeuges (13) des Bodenbearbeitungsgerätes (10) und die zweite Antenne (22) durchhängend am Werkzeugträger (12) befestigt ist.

5. Vorrichtung nach einem der Ansprüche 1 bis 4, dadurch gekennzeichnet, dass die Einrichtung zur Messung des Abstandes der beiden Antennen (20, 22) intermittierend tätig ist.

6. Vorrichtung nach einem der Ansprüche 1 bis 5, dadurch gekennzeichnet, dass eine Einrichtung zur Messung der Bodenfeuchtigkeit bzw. Bodenbeschaffenheit mit Hilfe eines zwischen den beiden Antennen fliessenden Stromes vorgesehen ist.

7. Vorrichtung zur Messung der Eindringtiefe von landwirtschaftlichen Bodenbearbeitungsgeräten, wie z.B. Pflugschar, Säschar oder Grubber, dadurch gekennzeichnet, dass eine erste Antenne (20) für ein Nachziehen auf dem Grund der vom Bodenbearbeitungsgerät (10) erzeugten Furche und eine zweite Antenne (22) für ein Nachziehen auf der nicht aufgegrabenen Bodenoberfläche sowie eine Einrichtung zur Messung des Abstandes der beiden Antennen (20, 22) mit Hilfe eines zwischen den beiden Antennen fliessenden Stromes vorgesehen sind.

## Claims

1. Device for measuring the depth of penetration of agricultural soil cultivation implements, such as, for example, a ploughshare, a sowing blade or a grubber, characterized in that a first antenna (20) for drawing along behind on the bottom of the furrow made by the soil cultivation implement (10), a second antenna (22) for drawing along behind on the soil surface not dug up, and a means for measuring the distance between the two antennae (20, 22) by means of electromagnetic signals exchanged between the two antennae are provided.

2. Device according to Claim 1, characterized in that the antennae are cables.

3. Device according to Claim 1, characterized in that the antennae each have an insulating plastic core, a metal wrapping round this core and a protective plastic sheathing tube round the metal wrapping.

4. Device according to one of Claims 1 to 3, characterized in that the first antenna (20) is fastened to the base of the or of one tool (13) of the soil cultivation implement (10), and the second antenna (22) is fastened so as to hang loosely on the tool carrier (12).

5. Device according to one of Claims 1 to 4, characterized in that the means for measuring the distance between the two antennae (20, 22) takes effect intermittently.

6. Device according to one of Claims 1 to 5, characterized in that a means for measuring the soil humidity or the nature of the soil by means of a current flowing between the two antennae is provided.

7. Device for measuring the depth of penetration of agricultural soil cultivation implements, such as, for example, a ploughshare, a sowing blade or a grubber, characterized in that a first antenna (20) for drawing along behind on the bottom of the furrow made by the soil cultivation implement (10), a second antenna (22) for drawing along behind on the soil surface not dug up, and a means for measuring the distance between the two antennae (20, 22) by means of a current flowing between the two antennae are provided.

**Revendications**

1. Dispositif pour la mesure de la profondeur de pénétration des outils pour le travail des champs, tels que par exemple les socs de charrue, les semoirs ou les cultivateurs, caractérisé en ce qu'il est prévu une première antenne (20) destinée à être traînée sur le fond du sillon creusé par l'outil (10) de travail du sol et une deuxième antenne (22) destinée à être traînée sur la surface du sol qui n'est pas creusée, ainsi qu'un dispositif pour la mesure de la distance des deux antennes (20, 22) à l'aide de signaux électromagnétiques échangés entre les deux antennes.

2. Dispositif selon la revendication 1, caractérisé en ce que les antennes sont des câbles.

3. Dispositif selon la revendication 1, caractérisé en ce que chacune des antennes comprend une âme en matière plastique isolante, une enveloppe métallique autour de cette âme, et un tube en matière plastique protecteur autour de l'enveloppe métallique.

4. Dispositif selon l'une des revendications 1 à 3, caractérisé en ce que la première antenne (20) est fixée à la base du ou d'un outil (13) de l'instrument (10) de travail du sol et en ce que la deuxième antenne (22) est fixée de façon lâche au support d'outil (12).

5. Dispositif selon l'une des revendications 1 à 4, caractérisé en ce que le dispositif pour la mesure de la distance des deux antennes (20, 22) fonctionne de façon intermittente.

6. Dispositif selon l'une des revendications 1 à 5, caractérisé en ce qu'il est prévu un dispositif pour la mesure de l'humidité du sol ou de l'état du sol à l'aide d'un courant établi entre les deux antennes.

7. Dispositif pour la mesure de la profondeur de pénétration des outils pour le travail des champs, comme par exemple les socs de charrue, les semoirs ou les cultivateurs, caractérisé en ce qu'il est prévu une première antenne (20) destinée à être traînée sur le fond du sillon creusé par l'outil (10) de travail du sol et une deuxième antenne (22) destinée à être traînée sur la surface du sol qui n'est pas creusée, ainsi qu'un dispositif pour la mesure de la distance des deux antennes (20, 22) à l'aide d'un courant établi entre les deux antennes.